# EUROPÄISCHE PATENTSCHRIFT

(11) **EP 1 394 915 B1**
(45) Veröffentlichungstag und Bekanntmachung des Hinweises auf die Patenterteilung: **16.09.2009**
(21) Anmeldenummer: 03017806.5
(22) Anmeldetag: 05.08.2003
(51) Int. Cl.: H02G 3/04, A47B 21/00

(54) **Kabelführung**
Cable guide
Guide de câble

(30) Priorität: 28.08.2002 DE 20213174 U
(43) Veröffentlichungstag der Anmeldung: 03.03.2004
(73) Patentinhaber: REHAU AG + Co, 95111 Rehau (DE)
(72) Erfinder: Graf, Frank, 95111 Rehau (DE); Kiessling, Peter, 95111 Rehau (DE); Peetz, Matthias, 95111 Rehau (DE)

(56) Entgegenhaltungen:
- GB-A- 2 233 163
- US-A- 5 900 586

## Beschreibung

Die Erfindung betrifft eine Führung von Anschlusskabeln von elektrischen Geräten, die von einem Arbeitsplatz zu den entsprechenden Anschlussstellen führen.

Büromöbel, die Computer, Server u.a. ähnliche Geräte aufnehmen, sind meist so angeordnet, dass die elektrischen Zuleitungen dieser Geräte über einem längeren Weg zu den Anschlussstellen geführt werden müssen. Dadurch ergeben sich zum einen Unfallquellen durch eine Vielzahl von lose auf dem Boden liegenden Kabeln und zum anderen wird der optische Gesamteindruck durch ein Wirrwarr von Kabeln beeinträchtigt.

Aus der DE 199 15 035 C2 ist ein Leitungsführungselement zum Führen wenigstens einer Leitung bekannt, bei dem ein Kettenglied einen Führungsbereich definiert, wobei das Kettenglied jeweils an einem ersten und einem zweiten Führungsabschnitt sowie einem einstückig dazwischenliegendem Gelenkabschnitt aus elastomerem Kunststoff aufweist. Durch die Ausbildung des Gelenkabschnittes zwischen zwei Führungsabschnitten wird in vorteilhafter Weise ein hoher konstruktiver Freiheitsgrad erzielt, so dass praktisch beliebige räumliche Kurven durch die Führungskette gebildet werden können. Das Kettenglied wird aus einer ersten und einer zweiten halbschalenförmigen Längsteilhälfte zusammengefügt. Die beiden Längsteilhälften können je zwei Fügebereiche aufweisen, so dass sie nach ihrer Zusammenfügung ein Kettenglied bilden, das den Führungsbereich seitlich vollständig begrenzt. Die so gebildeten Führungsabschnitte werden untereinander durch Gelenkabschnitte, die vorzugsweise faltenbalgartig ausgebildet sind, miteinander verbunden. Dies erlaubt die Bildung von Führungsketten beliebiger Länge.

Aus dem DE 295 07 312 U1 ist eine weitere Lösung bekannt.

Es wird ein Kabelkanal für beispielsweise Möbel mit an den Anschlussseiten offenen, durch Verbinder aneinander lösbar festlegbaren Kabelkanalelementen mit einer Bodenwand und zwei angrenzenden Seitenwänden zur Umgrenzung eines Kabelaufnahmeraumes, wobei die Kabelkanalelemente jeweils innenseitig eine, eine erste Aufnahmetasche und eine, eine zweite Aufnahmetasche aufweisendes Befestigungsaufnahmeteil aufweisen und in der ersten Aufnahmetasche ein Trägerelement zur Halterung des Kabelkanalelementes in einer Montageendstellung festlegbar und über die zweite Aufnahmetasche das Kabelkanalelement in einer gekippten Bestückungsstellung an dem Trägerelement abstützbar ist. Durch das im Innenbereich der Kabelkanalelemente angeordnete Befestigungsaufnahmeteil mit einer ersten Aufnahmetasche für die Festlegung an einem Trägerelement, das beispielsweise mit einer Möbelplatte verbunden ist, wird erreicht, dass die Kabelkanalelemente in einfacher handhabbarer Weise mit der Möbelplatte lösbar verbindbar sind. Durch die zweite Aufnahmetasche des Befestigungsaufnahmeteils können die Kabelkanalelemente in eine Bestückungsstellung überführt werden, in der sie für eine Bestückung mit elektrischen Steckverbindern und dergleichen zugänglich sind und gleichzeitig unverlierbar mit dem Trägerelement verbunden bleiben, in dem sie an dem Trägerelement hängen. Dadurch wird eine einfache und leicht handhabbare Bestückung des Möbelkanals ermöglicht.
Auch eine nachträgliche Kabelbestückung ist mit geringem Aufwand möglich, ohne dass der gesamte Kabelkanal demontiert werden muss.

Den vorbekannten Lösungen haftet der Nachteil an, dass sie ein unruhiges Erscheinungsbild haben, da sich die einzelnen Elemente nicht sauber und selbstständig zueinander ausrichten. Weiterhin kann es zu einem selbsttätigen Lösen der Verbindungen bei der Belegung bzw. bei auftretenden Kabelkräften kommen. Nachteilig wird weiterhin gesehen, dass diese Lösungen zum einen eine schlechte, aufwändige bzw. teilweise gar keine Zugentlastung und zum anderen eine nicht genügende bzw. nur in bestimmten Richtungen ausreichende Flexibilität aufweisen. Da sich die Öffnungen zum Einlegen der Kabel zueinander verdrehen, ist die Kabelbelegung meist sehr umständlich.

Die US-A-5 900 586 beschreibt einen flexiblen Kabelträger zum Verbinden von Kabelleitungen zwischen Möbeln, umfassend einen durchgehenden, flexiblen Trägerschlauch, eine Vielzahl beabstandeter, aufeinanderfolgender Hülseneinheiten, die von dem Schlauch getragen werden, damit die Kabelleitungen geschützt getragen werden können, wobei jede Hülseneinheit einen Zentralraum zur Unterbringung des Trägerschlauches und äußere Klammern mit geschlitzten Bereichen zur Unterbringung der Kabelleitungen hat, wobei die geschlitzten Bereiche benachbarter Hülseneinheiten im Wesentlichen auseinander ausgerichtet sind und wenigstens eine Klemmvorrichtung zum Befestigen eines Endes des Kabelträgers an einer Möbeleinheit. Der Trägerschlauch ist dabei als Kunststoffformteil mit Falten ausgebildet, um dem Träger eine flexible, aber feste Stütze zu geben. Jede Hülseneinheit ist an dem zentralen Trägerschlauch mittels eines einzigen Nietes angebracht.

Aufgabe der Erfindung ist es daher, die vorgenannten Nachteile zu beseitigen und eine Kabelführung zu schaffen, die zum einen eine leichte und einfache Handhabbarkeit aufweist, die wirtschaftlich ist sowie ein ästhetisches Gesamtbild aufweist und die eine horizontale Weiterführung der Kabelführung zu Raumausstattungselementen erlaubt.

Erfindungsgemäß wird die Aufgabe der Erfindung durch die Merkmale des Anspruchs 1 gelöst. Durch die genutete Ausführung des flexiblen Elementes, wobei dieses mindestens eine Nut aufweist, ist ein Verdrehen der Führungselemente sowie ein leichtes Lösen der Führungselemente nicht mehr möglich. Durch das flexible genutete Element ist immer eine Ausrichtung, selbst bei Verdrillung der Führungselemente, gegeben. Das flexible Element ist dabei in allen Richtungen flexibel.
Weiterhin vorteilhaft wird gesehen, dass die Länge des flexiblen Elementes beliebig wählbar ist, so dass sowohl eine Kabelführung vom Boden zu einer Tischkante als auch vom Boden zu einer Decke realisierbar ist. Das flexible Element ist dabei vorteilhafterweise so zugfest ausgeführt, dass ein Trennen bzw. Entrasten von Führungselementen nicht möglich ist.

Zur Entlastung der in der Kabelführung enthaltenen Kabel weist mindestens eines der endseitig angeordneten Befestigungsteile eine Einrichtung zur Zugentlastung auf, welche ohne zusätzliche Befestigungsmittel und Werkzeuge realisierbar ist. Vorzugsweise wird diese im Befestigungsteil, das am Raumausstattungselement angebracht ist, vorgesehen.

Die Führungselemente weisen an ihrer dem flexiblen Element zugewandten Seite beispielsweise eine über die gesamte Breite ausgeführte Einbuchtung auf, wobei mindestens in dieser ein in die Nut des flexiblen Elementes eingreifender nasenartiger Vorsprung angeordnet ist.

Die Führungselemente weisen mindestens zwei Kammern zur Aufnahme der Kabel auf. Sie können am flexiblen Element einseitig oder versetzt, vorzugsweise um 180°, zueinander aufgebracht bzw. eingeclipst werden. Bei um 180° versetzter Anordnung der Führungselemente ergibt sich dann die doppelte Kammeranzahl zur Aufnahme der Kabel.

Nach dem Anbringen der Befestigungselemente wird das flexible genutete Element mit Führungselementen zwischen diesen befestigt. Die Führungselemente richten sich dabei selbsttätig aus, wodurch sich ein optisch geordnetes Erscheinungsbild ergibt.
Durch die vorteilhafte Ausbildung der Führungselemente können diese sowohl vertikal als auch horizontal montiert und eingesetzt werden.

Anhand von Ausführungsbeispielen, welche die Erfindung nicht einschränken, soll diese näher beschrieben werden. Es zeigen:
- Figur 1 -: Gesamtansicht der Kabelführung
- Figur 2 -: Schnittdarstellung eines Seiles
- Figur 3 -: Perspektive Darstellung eines Führungselementes
- Figur 4 -: Schnittdarstellung eines Führungselementes
- Figur 5 -: Schnittdarstellung eines Profils
- Figur 6 -: oberes Befestigungsteil

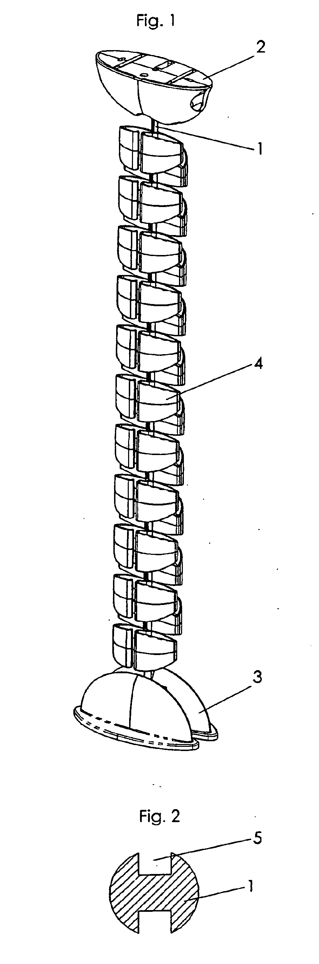

In Figur 1 ist eine Gesamtansicht der erfindungsgemäßen Kabelführung dargestellt. Diese besteht aus einem unteren Befestigungsteil 3, einem oberen Befestigungsteil 2 und aus an dem flexiblen Element 1 angeordneten Führungselementen 4, welche in diesem Ausführungsbeispiel zueinander um 180° versetzt in jeweils einer Reihe am flexiblen Element 1 angeordnet sind.

Dabei ist das Führungselement 4 über die Einbuchtung 6 an dem flexiblen Element 1 so angeordnet, dass der nasenartige Vorsprung 7 in der Nut 5 des flexiblen Elementes 1 positioniert ist.

In Figur 2 ist eine Schnittdarstellung des Seiles 11 dargestellt, welches in diesem Ausführungsbeispiel zwei diametral einander gegenüberliegende Nuten 5 aufweist, in die der nasenartige Vorsprung 7 der Einbuchtung 6 des Führungselementes 4 einbringbar ist. Das Seil 11 weist einen runden Querschnitt auf.
Es liegt jedoch auch im Rahmen der Erfindung das Seil 11 geometrisch so auszuführen, dass mehrere Nuten 5 in dieses Seil 11 einbringbar sind und somit die Führungselemente 4 nicht nur diametral gegenüber liegend, sondern auch in weiteren Anordnungen an dem Seil 11 befestigbar sind. Hier können insbesondere prismatische oder mehreckige Seilquerschnitte verwendet werden, in die eine entsprechende Anzahl an Nuten 5 einbringbar sind, welche auch nicht über die gesamt Länge des Seiles 11, sondern nur partiell verlaufen können.

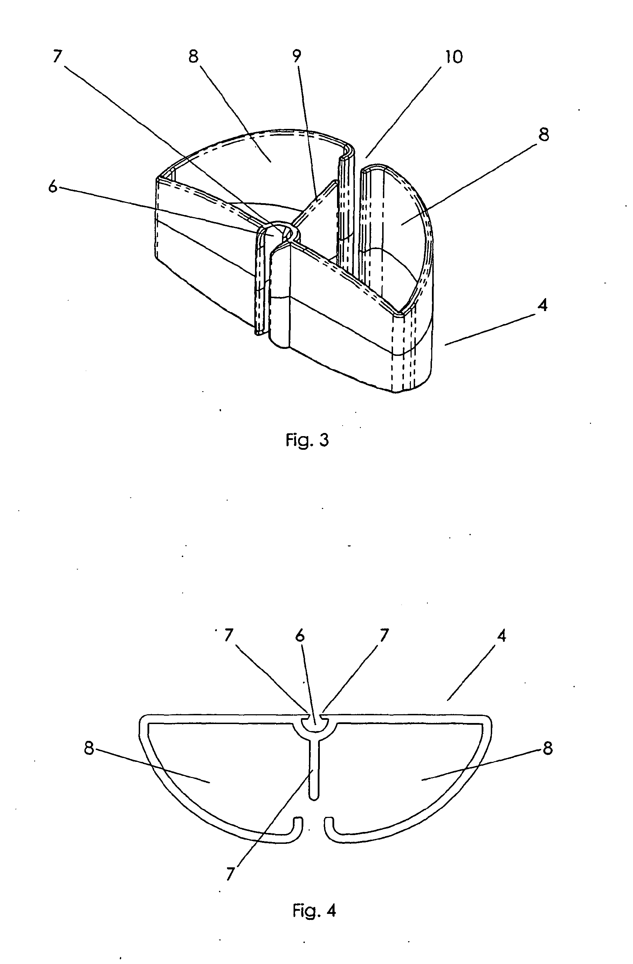

In Figur 3 ist ein Ausführungsbeispiel des Führungselementes 4 dargestellt. Dieses Führungselement 4 weist eine Einbuchtung 6 auf, in der ein von der Öffnung der Einbuchtung 6 gegenüberliegender nasenartiger Vorsprung 7 angeordnet ist, welcher in diesem Ausführungsbeispiel über die gesamte Höhe der Einbuchtung 6 ausgebildet ist. Es liegt jedoch auch im Rahmen der Erfindung, diesen nasenartigen Vorsprung 7 partiell in der Einbuchtung 6 auszubilden bzw. an einer anderen Position innerhalb der Einbuchtung 6 auszubilden. Gegenüber dem nasenartigen Vorsprung 7 der Einbuchtung 6 ist eine Trennwand 9 angeordnet, welche die beiden Kammern 8 des Führungselementes 4 voneinander separiert. Die Kammern 8 des Führungselementes 4 sind an der Einbuchtung 6 in etwa rechtwinklig zum nasenartigen Vorsprung 7 angeordnet und weisen gegenüber der Trennwand 9 eine über die gesamte Höhe des Führungselementes 4 reichende Öffnung 10 auf. Im Bereich der Öffnung 10 des Führungselementes 4 sind die freien Enden bogenförmig in das Innere der Kammer 8 weisend ausgebildet, um das Einführen der Kabel in die jeweilige Kammer 8 zu erleichtern. Die Führungselemente 4 sind so ausgebildet, dass bei einer reihenförmigen Anordnung am flexiblen Element 1 eine Kabelführung mit zwei Kammern 8 ausgebildet wird.

Es liegt jedoch auch im Rahmen der Erfindung, die Führungselemente 4 um 180° versetzt einander gegenüberliegend am flexiblen Element 1 anzuordnen und so eine Kabelführung mit insgesamt vier Kammern 8 auszubilden. Weitere Ausgestaltungen von Kabelführungen mit zusätzlichen Kammern 8 sind durch die Wahl der Geometrie des flexiblen Elementes 1 jederzeit ausbildbar und liegen im Rahmen dieser Erfindung.

In Figur 4 ist ein weiteres Ausführungsbeispiel des Führungselementes 4 dargestellt. Bei diesem Führungselement 4 ist die Einbuchtung 6 in etwa halbkreisförmig ausgebildet und weist an ihrer Öffnung zwei diametral gegenüberliegend angeordnete nasenartige Vorsprünge 7 auf. Diese nasenartigen Vorsprünge 7 dienen dazu, das Führungselement 4 in den Nuten 5 des Seiles 11 zu fixieren.

Bei der Montage der erfindungsgemäßen Kabelführung werden zunächst das untere Befestigungsteil 3 und das obere Befestigungsteil 2 fixiert, beispielsweise an einem Schreibtisch. In einem nächsten Montageschritt wird je nach den Anforderungen des Nutzers der Zwischenraum zwischen dem oberen Befestigungsteil 2 und dem unteren Befestigungsteil 3 mit der entsprechenden Anzahl an Führungselementen 4 aufgefüllt, in dem diese am Seil 11 befestigt werden, so dass in die Kammern 8 der Führungselemente 4 die entsprechenden Kabel einbringbar sind.
In einer weiteren vorteilhaften Ausführungsform ist die erfindungsgemäße Kabelführung bereits vormontiert, d. h. zwischen dem oberen Befestigungsteil 2 und dem unteren Befestigungsteil 3 sind ausreichend Führungselemente 4 am Seil 11 angebracht. so dass die Kabelführung nur noch am Tisch befestigt werden muss.
Ein weiterer Vorteil der erfindungsgemäßen Kabelführung wird darin gesehen, dass die Führungselemente 4 sowohl in vertikaler als auch in horizontaler Position einfach und leicht wechselbar montierbar sind.
In diesem Fall wird das Seil 11 an der erforderlichen Position beispielsweise der Schreibtischplatte fixiert, welche vorteilhafterweise in der Nähe des oberen Befestigungsteils 2 der Kabelführung liegt, so dass beginnend von diesem oberen Befestigungsteil 2 zusätzliche Führungselemente 4 an den Seil 11 befestigbar sind, so dass die bereits in der Kabelführung positionierten Kabel horizontal bis zum entsprechenden Verbraucher führbar sind.

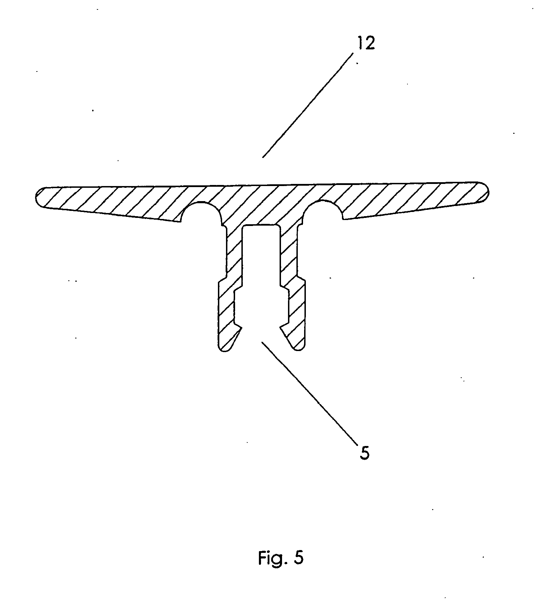

Es liegt jedoch auch im Rahmen der Erfindung, dass für eine horizontale Positionierung der Kabelführung ein Profil 12, wie in Figur 5 dargestellt, verwendbar ist, welches an der Tischplatte fixierbar ist. Dieses Profil 12 ist auf seiner von der Tischplatte wegweisenden Seite so ausgebildet, dass es eine Nut 5 aufweist, die mit der entsprechendenden Einbuchtung 6 des Führungselementes 4 kommuniziert, so das die Führungselemente 4 einfach und leicht anbringbar sind.

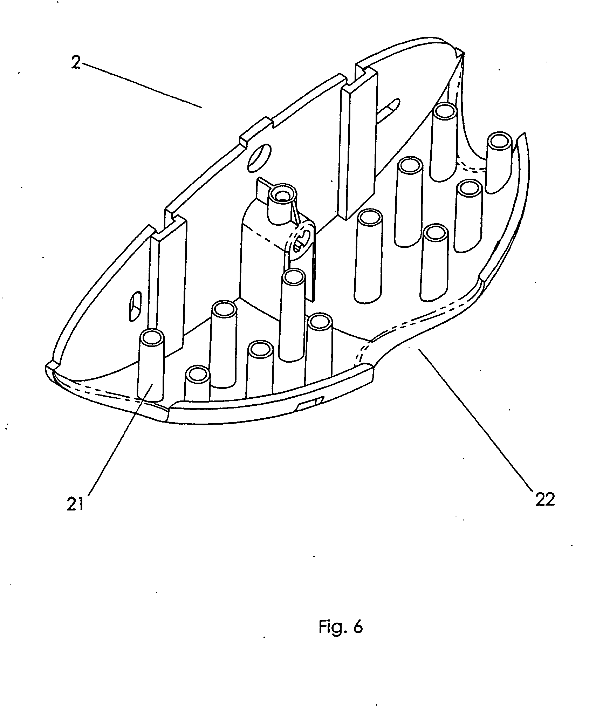

In Figur 6 ist ein Teilbereich des oberen Befestigungsteils 2 dargestellt. Dieser Teilbereich weist in seinem Inneren eine Einrichtung 21 zur Zugentlastung, welche in diesem Ausführungsbeispiel als Dome ausgebildet sind, auf, die so angeordnet sind, dass durch die Öffnung 22 des oberen Befestigungsteils 2 die Kabel führbar und zwischen den Domen verschlungen fixierbar sind, so dass für das jeweilige, hier nicht dargestellte, Kabel eine Zugentlastung realisierbar ist.
Weiterhin vorteilhaft wird gesehen, das diese Einrichtung 21 zur Zugentlastung ohne Werkzeuge bzw. ohne zusätzliche Befestigungsmittel realisierbar ist.
In diesem Ausführungsbeispiel ist die Einrichtung 21 zur Zugentlastung an der Seitenfläche des Teilbereiches des oberen Befestigungsteiles 2 angebracht. Es liegt jedoch auch im Rahmen der Erfindung, in alle anderen Teilbereiche des oberen Befestigungsteiles 2 derartige Einrichtungen 21 zur Zugentlastung einzubringen.

### Bezugszeichen

- 1 -: flexibles Element
- 2 -: oberes Befestigungsteil
- 3 -: unteres Befestigungsteil
- 4 -: Führungselement
- 5 -: Nut
- 6 -: Einbuchtung
- 7 -: nasenartiger Vorsprung
- 8 -: Kammer
- 9 -: Trennwand
- 10 -: Öffnung
- 11 -: Seil
- 12 -: Profil
- 21 -: Einrichtung zur Zugentlastung
- 22 -: Öffnung

## Patentansprüche

1. Kabelführung, bestehend aus einer Reihe von Führungselementen, die aneinander untereinander verbindbar sind und Kammern (8) und Öffnungen (10) zum Einbringen von Kabeln aufweisen, dass die einzelnen Führungselemente (4) an einem durchgehenden flexiblen Element (1) angeordnet sind, wobei die freien Enden des flexiblen Elementes (1) mit einem Befestigungsteil (2, 3) verbindbar sind,
**dadurch gekennzeichnet,**
**dass** das flexible Element (1) mindestens eine Nut (5) aufweist, wobei die Nut (5) axial in das flexible Element (1) eingebracht ist.

2. Kabelführung nach Anspruch 1, **dadurch gekennzeichnet, dass** die Nut (5) partiell in das flexible Element (1) eingebracht ist.

3. Kabelführung nach Anspruch 1, **dadurch gekennzeichnet, dass** die Nut (5) spiralförmig in das flexible Element (1) eingebracht ist.

4. Kabelführung nach einem der vorhergehenden Ansprüche, **dadurch gekennzeichnet, dass** das flexible Element (1) als Seil (11) ausgebildet ist.

5. Kabelführung nach einem der vorhergehenden Ansprüche, **dadurch gekennzeichnet, dass** das flexible Element (1) als Profil (12) ausgebildet ist.

6. Kabelführung nach einem der vorhergehenden Ansprüche, **dadurch gekennzeichnet, dass** das flexible Element (1) aus einem thermoplastischen Werkstoff besteht.

7. Kabelführung nach einem der vorhergehenden Ansprüche, **dadurch gekennzeichnet, dass** mindestens eines der endseitig angeordneten Befestigungsteile (2, 3) eine Einrichtung (21) zur Zugentlastung aufweist.

8. Kabelführung nach einem der vorhergehenden Ansprüche, **dadurch gekennzeichnet, dass** die Einrichtung (21) zur Zugentlastung keine Befestigungselemente aufweist.

9. Kabelführung nach einem der vorhergehenden Ansprüche, **dadurch gekennzeichnet, dass** das Führungselement (4) an seiner, dem flexiblen Element (1) zugewandten Seite eine Einbuchtung (6) aufweist.

10. Kabelführung nach einem der vorhergehenden Ansprüche, **dadurch gekennzeichnet, dass** die Einbuchtung (6) mindestens einen in die Nut (5) des flexiblen Elementes (1) eingreifenden nasenartigen Vorsprung (7) aufweist.

11. Kabelführung nach einem der vorhergehenden Ansprüche, **dadurch gekennzeichnet, dass** das Führungselement (4) mindestens zwei Kammern (8) zur Aufnahme der Kabel aufweist.

12. Kabelführung nach einem der vorhergehenden Ansprüche, **dadurch gekennzeichnet, dass** die Führungselemente (4) am flexiblen Element (1) einseitig oder versetzt zueinander anordenbar sind.

## Claims

1. Cable guide, comprising a series of guide elements which can be connected to one another one beneath the other and have chambers (8) and openings (10) for inserting cables, with the individual guide elements (4) being arranged on a continuous flexible element (1), it being possible to connect the free ends of the flexible element (1) to a fastening part (2, 3),
**characterized**
**in that** the flexible element (1) has at least one groove (5), with the groove (5) being made axially in the flexible element (1).

2. Cable guide according to Claim 1, **characterized in that** the groove (5) is made partly in the flexible element (1).

3. Cable guide according to Claim 1, **characterized in that** the groove (5) is made in a helical manner in the flexible element (1).

4. Cable guide according to one of the preceding claims, **characterized in that** the flexible element (1) is in the form of a cord (11).

5. Cable guide according to one of the preceding claims, **characterized in that** the flexible element (1) is in the form of a profile (12).

6. Cable guide according to one of the preceding claims, **characterized in that** the flexible element (1) is composed of a thermoplastic material.

7. Cable guide according to one of the preceding claims, **characterized in that** at least one of the fastening parts (2, 3) which is arranged at the end has a device (21) for strain relief.

8. Cable guide according to one of the preceding claims, **characterized in that** the device (21) for strain relief does not have any fastening elements.

9. Cable guide according to one of the preceding claims, **characterized in that** the guide element (4) has a recess (6) on its side which faces the flexible element (1).

10. Cable guide according to one of the preceding claims, **characterized in that** the recess (6) has at least one lug-like projection (7) which engages in the groove (5) of the flexible element (1).

11. Cable guide according to one of the preceding claims, **characterized in that** the guide element (4) has at least two chambers (8) for accommodating the cables.

12. Cable guide according to one of the preceding claims, **characterized in that** the guide elements (4) can be arranged on the flexible element (1) on one side or in a manner offset in relation to one another.

## Revendications

1. Guide-câble, constitué d'une série d'éléments de guidage, qui peuvent être connectés mutuellement les uns aux autres et qui présentent des chambres (8) et des ouvertures (10) pour l'introduction de câbles, les éléments de guidage (4) individuels étant disposés sur un élément flexible continu (1), les extrémités libres de l'élément flexible (1) pouvant être connectées à une partie de fixation (2, 3),
**caractérisé en ce que**
l'élément flexible (1) présente au moins une rainure (5), la rainure (5) étant introduite axialement dans l'élément flexible (1).

2. Guide-câble selon la revendication 1, **caractérisé en ce que** la rainure (5) est introduite partiellement dans l'élément flexible (1).

3. Guide-câble selon la revendication 1, **caractérisé en ce que** la rainure (5) est introduite en spirale dans l'élément flexible (1).

4. Guide-câble selon l'une quelconque des revendications précédentes, **caractérisé en ce que** l'élément flexible (1) est réalisé sous forme de câble (11).

5. Guide-câble selon l'une quelconque des revendications précédentes, **caractérisé en ce que** l'élément flexible (1) est réalisé sous forme de profilé (12).

6. Guide-câble selon l'une quelconque des revendications précédentes, **caractérisé en ce que** l'élément flexible (1) se compose d'un matériau thermoplastique.

7. Guide-câble selon l'une quelconque des revendications précédentes, **caractérisé en ce qu'**au moins l'une des pièces de fixation (2, 3) disposées du côté de l'extrémité présente un dispositif (21) pour la décharge de traction.

8. Guide-câble selon l'une quelconque des revendications précédentes, **caractérisé en ce que** le dispositif (21) pour la décharge de traction ne présente pas d'élément de fixation.

9. Guide-câble selon l'une quelconque des revendications précédentes, **caractérisé en ce que** l'élément de guidage (4) présente sur son côté tourné vers l'élément flexible (1) un renfoncement (6).

10. Guide-câble selon l'une quelconque des revendications précédentes, **caractérisé en ce que** le renfoncement (6) présente au moins une saillie en forme de nez (7) venant en prise dans la rainure (5) de l'élément flexible (1).

11. Guide-câble selon l'une quelconque des revendications précédentes, **caractérisé en ce que** l'élément de guidage (4) présente au moins deux chambres (8) pour recevoir les câbles.

12. Guide-câble selon l'une quelconque des revendications précédentes, **caractérisé en ce que** les éléments de guidage (4) peuvent être disposés sur l'élément flexible (1) d'un côté ou de manière décalée les uns par rapport aux autres.
